# EUROPEAN PATENT APPLICATION

(11) **EP 4 641 787 A1**
(43) Date of publication of application: **29.10.2025**
(21) Application number: 24171864.2
(22) Date of filing: 23.04.2024
(51) Int. Cl.: H01M 50/209, H01M 50/227, H01M 10/04, H01M 10/613, H01M 10/625

(54) **BATTERY MODULE, BATTERY SYSTEM, ELECTRIC VEHICLE, METHOD FOR ASSEMBLING A BATTERY MODULE AND HOUSING**

(71) Applicant: Samsung SDI Co., Ltd., Yongin-si, Gyeonggi-do 17084 (KR)
(72) Inventor: BURKE, Thomas, 8564 Ligist (AT)
(74) Representative: Gulde & Partner

(57) **Abstract**

The present disclosure refers to a battery module (100), a battery system (1000) including a plurality of the battery modules (100), an electric vehicle including the battery module (100) and/or the battery system (1000), a method for assembling a battery module (100) and a housing (30) configured to accommodate a battery module (100).

The battery module (100) includes a battery cell stack (10) with a plurality of battery cells (12) arranged along a stacking direction (S) and a housing (30) configured to accommodate the battery cell stack (10). The housing (30) includes a bottom portion (32), a top portion (34), two side portions (36, 38) arranged opposite to each other with respect to the stacking direction (S) and interconnecting the bottom portion (32) and the top portion (34) along a height direction (H) and a side opening (40) through which the battery cell stack (10) is insertable into or removable from the housing (30) along an insertion direction (I) orthogonal to the stacking direction (S) and orthogonal to the height direction (H). The top portion (34) includes an opened section (42) to overlay the electrode terminals (14) and the venting valves (16) of the plurality of battery cells (12) of the battery cell stack (10) when the battery cell stack (10) is accommodated in the housing (30).

## Description

### Field of the Disclosure

Embodiments of the present disclosure relate to a battery module, a battery system including the battery module and an electric vehicle including the battery module and/or the battery system. Further, the present disclosure pertains to a method for assembling the battery module and a housing configured to accommodate a battery cell stack.

### Technological Background

Recently, vehicles (e.g., vehicles for transportation of goods and people) have been developed that use electric power as a source for motion. Such an electric vehicle is an automobile that is propelled permanently or temporarily by an electric motor, using energy stored in rechargeable (or secondary) batteries. An electric vehicle may be solely powered by batteries (such as in a battery electric vehicle (BEV)) or may include a combination of an electric motor and, for example, a conventional combustion engine (such as in a plugin hybrid electric vehicle (PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery main module is formed of a plurality of battery cells connected together in series and/or in parallel. That is, the battery main module is formed by interconnecting the electrode terminals of the plurality of battery cells depending on a required amount of power and in order to realize a high-power rechargeable battery.

Battery main modules can be constructed either in a block design or in a modular design. In the block design each battery cell is coupled to a common current collector structure and a common battery management system and the unit thereof is arranged in a housing. In the modular design, pluralities of battery cells are connected together to form (sub)modules and several (sub)modules are connected together to form the battery main module. In automotive applications, battery systems often consist of a plurality of battery (sub)modules and/or battery main modules connected to each other in series to provide a desired voltage.

A mechanical integration of a battery main module requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

The mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery main module is mounted to a carrying structure of the vehicle. In case the battery main module shall be fixed at the bottom of the vehicle, the mechanical connection may be established from the bottom side by for example bolts passing through the carrier framework of the battery main module. The framework is usually made of aluminum or an aluminum alloy to lower the total weight of the construction.

In order to reduce the manufacturing cost of battery modules, document EP 3 968 445 A2 discloses a battery module including a battery cell stack, a mono frame with an open front surface and an open rear surface and end plates for covering the open front surface rear surfaces of the mono frame. The battery module is horizontally assembled by inserting the battery cell stack into the opened front surface or rear surface of the mono frame and covering the front surface and the rear surface by end plates.

However, despite the efforts made in the prior art, the manufacturing of the battery systems is still cumbersome, cost-intensive and the design of the battery module housings is limited due to required mechanical resilience properties for reducing the risks of bending of the housing during stacking or during use of the battery system. During the operation of a battery system, the battery cells heat up and inflates as a result of a chemical reaction, thereby causing a force on the housing which bends the housing. The bending of the housing impairs the service life of at least the battery cells next to the bent housing and may further lead to other unexpected phenomena which, in turn, may lead to a weakening of the entire battery system.

It is thus an object of the present invention provide a simplified battery module with an increased service life.

### Summary of Invention

The invention is defined by the appended claims and their equivalents. The description that follows is subjected to this limitation. Any disclosure lying outside the scope of said claims and their equivalents is only intended for illustrative as well as comparative purposes.

According to an embodiment of the present disclosure, a battery module including a battery cell stack with a plurality of battery cells arranged along a stacking direction; and a housing configured to accommodate the battery cell stack is provided. The housing incudes a bottom portion, a top portion, two side portions arranged opposite to each other with respect to the stacking direction and interconnecting the bottom portion and the top portion along a height direction and has a side opening through which the battery cell stack is insertable into or removable from the housing along an insertion direction orthogonal to the stacking direction and orthogonal to the height direction. The top portion has an opened section to overlay the electrode terminals and the venting valves of the plurality of battery cells of the battery cell stack.

According to another embodiment of the present disclosure, a battery system including a plurality of the battery modules arranged adjacent to each other is provided.

Yet another embodiment of the present disclosure refers to an electric vehicle including the battery module and/or the battery system.

Yet another embodiment of the present disclosure pertains to a method for assembling a battery module. the method includes the steps of a) providing a battery cell stack with a plurality of battery cells arranged along a stacking direction; b) providing a housing configured to accommodate the battery cell stack, wherein the housing includes a bottom portion, a top portion, two side portions arranged opposite to each other with respect to the stacking direction and interconnecting the bottom portion and the top portion along a height direction and a side opening through which the battery cell stack is insertable into or removable from the housing along an insertion direction orthogonal to the stacking direction and orthogonal to the height direction, wherein the top portion includes an opened section to overlay the electrode terminals and the venting valves of the plurality of battery cells of the battery cell stack; and c) inserting the battery cell stack into the housing through the side opening along the insertion direction.

Yet another embodiment of the present disclosure refers to a housing configured to accommodate a battery cell stack including a bottom portion, a top portion, two side portions arranged opposite to each other with respect to a stacking direction of the battery cells of the battery cell stack and interconnecting the bottom portion and the top portion along a height direction and a side opening through which the battery cell stack is insertable into or removable from the housing along an insertion direction orthogonal to the stacking direction and orthogonal to the height direction, wherein the top portion includes an opened section to overlay electrode terminals and venting valves of the battery cells of the battery cell stack.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a schematic perspective view of a battery module according to an embodiment in a first configuration.
FIG. 2 illustrates a schematic perspective view of the battery module of FIG. 1 in a second configuration.
FIG. 3 illustrates a schematic enlarged view of III shown in FIG. 2.
FIG. 4 illustrates a schematic perspective view of a housing according to an embodiment.
FIG. 5 illustrates a schematic cross-sectional on the housing shown in FIG. 4.
FIG. 6 illustrates a schematic perspective view of the battery system including four battery modules shown in FIG. 1.
FIG. 7 illustrates a schematic flow chart of a method for assembling the battery module shown in FIG. 1 according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" or "top" and "lower" or "bottom" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one embodiment of the present disclosure, a battery module is provided. The battery module includes a battery cell stack and a housing. The battery cell stack includes a plurality of battery cells arranged along a stacking direction. The housing is configured to accommodate the battery cell stack.

The housing includes a bottom portion, a top portion and two side portions. The side portions are arranged opposite to each other with respect to the stacking direction and interconnect the bottom portion and the top portion along a height direction, e.g. a height direction with respect to the height of the battery cells of the battery cell stack. The side portions interconnect a first end of the bottom portion and a first end of the top portion as well as a second end of the bottom portion arranged opposite to the first end of the bottom portion along the stacking direction and a second end of the top portion arranged opposite to the first end of the top portion along the stacking direction. The bottom portion may correspond to a bottom of the housing. The side portions may be formed as lateral walls extending from the bottom portion. The top portion may correspond to a top cover of the housing.

The housing further includes a side opening through which the battery cell stack is insertable into or removable from the housing along an insertion direction (or along a direction opposite to the insertion direction which will not be repeated but considered as well in the following disclosure). The insertion direction is orthogonal to the stacking direction and orthogonal to the height direction. That is, the battery cell stack is inserted sideward into the housing. In other words, the housing provides a structure circumferentially enclosing an inserted battery cell stack, when viewed from the insertion direction. That is, the housing is a closed structure, e.g. a closed frame, with an insertion opening (the side opening), when viewed from the insertion direction. Due to this structure, bending of the side portions along the stacking direction, e.g. during assembly or operation of the battery module, may be prevented or at least reduced. At the side arranged opposite to the side opening along the insertion direction, the housing may be closed, e.g. by a wall extending from the bottom portion to the top portion along the height direction. Due to the closure of the side opposite to the side opening, the wall may act as a limit stop when the battery cell stack is inserted into the housing. Accordingly, the assembly thereof is facilitated and the robustness of the battery module may be enhanced. Alternatively, the housing may include another side opening at the side arranged opposite to the side opening along the insertion direction and through which the battery cell stack is insertable into or removable from the housing along an insertion direction. The side openings may be formed identically. Accordingly, the battery cell stack is insertable into the housing from both sides, thereby facilitating the assembly of the battery module. In addition, less space along the insertion direction is required. In other words, the length of the battery cell stack may correspond to the length of the housing with respect to the insertion direction such that the battery cell stack may be arranged flush with the housing. Advantageously, a compact battery module may be obtained. The length of the housing along the insertion direction may be of a value such that the battery cell stack may be accommodated entirely in the housing, at least with respect to the insertion direction.

The top portion includes an opened section to overlay the electrode terminals and the venting valves of the plurality of battery cells of the battery cell stack when the battery cell stack is accommodated in, i.e. inserted into, the housing. In other words, the opened section is configured such that the electrode terminals and the venting valves of the plurality of battery cells of the accommodated battery cell stack are exposed when viewed from above, i.e. on the top portion of the housing. Due to the exposure of the functional areas of the battery cells, i.e. the electrode terminals and the venting valves, the electrode terminals may be connected subsequently and the venting valves are not blocked by the housing in case of a venting event in which the venting of the battery cell via the venting valve is required. The opened section is encompassed by the top portion along the insertion direction, e.g. by bars extending between the side portions along the stacking direction. In other words, despite the opened section for providing access to the functional areas of the battery cells, the top portion increases rigidity and stiffness of the housing against potential bending of the side portions. Accordingly, bending of the side portions of the housing can be prevented or at least reduced and, thus, the service life of the battery module can be increased.

According to one embodiment, the opened section may include a slit-like opening extending through the top portion along the stacking direction and overlaying each of the electrode terminals and the venting valves of the plurality of battery cells of the battery cell stack when the battery cell stack is accommodated in the housing. In other words, the slit-like opening is sized such that all of the functional areas, i.e. the electrode terminals and the venting valves, of the battery cells of the battery cell stack are exposed when viewed from above, i.e. on the top portion. Accordingly, only one opening has to be provided into the top portion to provide the functionality, thereby facilitating the manufacturing of the battery module. Although reference is made to a slit-like opening, the opening is not limited thereto and may be shaped differently, e.g. circular, ellipsoidal, rhombic and so on. As the battery cells are mostly rectangular shaped, e.g. squared or cuboid (prismatic cells), and arranged in a line along the stacking direction such that straight rows of electrodes and venting valves are formed, the slit-like opening are efficient for exposing the electrodes and venting valve, while providing rigidity and stiffness of the housing against potential bending of the side portions.

According to another embodiment, the opened section may include three slit-like openings extending through the top portion along the stacking direction. Two of the three slit-like openings may (be formed to) overlay the electrode terminals, i.e. one slit-like opening for each row of electrode terminals, and (the remaining) one of the three slit-like openings may (be formed to) overlay the venting valves of the plurality of battery cells of the battery cell stack when the battery cell stack is accommodated in the housing. In other words, the top portion of the housing may include two further bars extending between the side portions along the stacking direction and being arranged between the slit-like openings. The further bars further increase the rigidity and stiffness of the housing against potential bending of the side portions, while (still) exposing the electrode terminals and the venting valves when viewed from above, i.e. on the top portion. The slit-like openings may be arranged in parallel to each other. Although reference is made to slit-like openings, the openings are not limited thereto and may be shaped differently, e.g. circular, ellipsoidal, rhombic and so on.

According to another embodiment, the opened section may extend entirely through the top portion along the stacking direction. In addition, the opened section may partially extend through the side portions. Advantageously, the manufacturing of the housing may be facilitated. In addition, a horizontal venting channel, i.e. along the stacking direction, may be obtained which partially extends through the side portions such that no additional space is required along the height direction for discharging venting gas out of the battery module.

According to another embodiment, the battery cell stack may include a force distribution plate and a compressible elastic element arranged at each of the end portions of the battery cell stack in the stacking direction. In other words, both opposite end portions of the battery cell stack along the stacking direction are covered or encompassed by a force distribution plate. The force distribution plates may be shaped to substantially correspond to the size of the battery cells of the battery cell stack when viewed in the stacking direction. Accordingly, the battery cell stack may be handled by contacting the distribution plates without being damaged. The compressible elastic elements may be disposed on the outer surface of the distribution plates with respect to the stacking direction. At least one of or each of the compressible elastic elements may be a spring. The compressible elastic elements may be compressed during grabbing the battery cell stack at the force distribution plates such that the extension of the battery cell stack along the stacking direction is reversibly reducible until the battery cell stack is accommodated in the housing, where the compressible elastic element provide a restoration force against the side portions of the housing to ensure a firm seating of the accommodated battery cell stack at least to some extent. Accordingly, the assembly of the battery module is facilitated and the service life thereof is improved.

The compressible elastic elements may be degressive springs. At the beginning of compression, degressive springs are compressible by applying relatively low force, while the amount of force necessary to further compress the spring is increasing during compression. Therefore, the extension of the battery cell stack along the stacking direction may be reduced relatively easily when inserting the battery cell stack into the housing in order to assembly the battery module. When the battery cell stack is accommodated in the housing, further compressing of the partially compressed degressive springs requires an increasing amount of force such that the extent of firm seating of the accommodated battery cell stack may be increased.

According to another embodiment, each of the side portions of the housing may include a recess for receiving the compressed elastic element. The recesses provide further space for inserting the battery cell stack into the housing, thereby further facilitating the assembly of the battery module. A depth of each of the recesses may be more than 5 percent and/or less than 30 percent, less than 20 percent or less than 10 percent of the thickness of the side portion along the stacking direction. For example, the housing and the recesses may be designed such that the compressible elastic elements are compressed when the battery cell stack is accommodated in the housing, for example at least by 10 percent and/or up to 75 percent, up to 50 percent or up to 25 percent with respect to the length of the compressible elastic element in the rest position.

According to another embodiment, the housing may include a cooling plate arranged on the bottom portion. The cooling plate enhances heat dissipation. The cooling plate may be arranged on an inner side of the bottom portion. In other words, the cooling plate may be arranged between the bottom portion of the housing and the accommodated battery cell stack. Advantageously, the transmission of heat in the battery module, e.g. generated by the operation of the battery cells, towards the outside is further enhanced due to the positioning, thereby reducing the amount of swelling of the battery cells, and, thus, the amount of bending of the side portions of the housing.

According to another embodiment, the bottom portion, the top portion and the side portions of the housing may be integrally formed. In other words, the housing may be integrally formed. For example, the housing may be extruded and, optionally, mechanically processed, e.g. to include the opened section in the top portion. Integrally formed structures provide further rigidity and stiffness of the housing against potential bending of the side portions. Alternatively, the bottom portion, the top portion and the side portions of the housing may be connected to each other in a fabric-conclusive manner. In other words, the bottom portion, the top portion and the side portions may be separative parts, e.g. extruded separate parts, which are connected to each other in a subsequent step, e.g. to form a woven fabric.

According to another embodiment, the housing may be made of plastics or a hybrid combination including plastics. Due to the closed structure of the housing, the rigidity and stiffness thereof are increased to such an extent that materials with less mechanical resilience compared to the commonly used metals in the prior art, such as aluminum, may be used. In contrast to metals, plastics are insulating, thereby reducing the risk of current leakage or short circuiting.

According to another embodiment, the top portion may include a convex shape. In other words, the middle section of the top portion along the stacking direction may be thicker than its end portions. Due to the convex shape, the risk of bending of the side portions may be further reduced. The top portion may include a single convex shape arranged at one surface, e.g. the inner surface or the outer surface, or a double convex shape arranged on both of its surfaces, namely the inner and the outer surface. The convex shape may be formed such that the middle section of the top portion along the stacking direction may be at least 5 percent or at least 10 percent and/or less than 100 percent, less than 75 percent, less than 50 percent or less than 25 percent thicker than its end portions.

The invention also pertains to a battery system including a plurality of battery modules according to the disclosure arranged adjacent to each other. For example, the battery system may be a traction battery. The plurality of battery modules may be arranged adjacent to each other in a modular manner, e.g. a grid-like arrangement. In other words, the battery modules may be arranged adjacent to each other in the stacking direction and/or the insertion direction. Accordingly, a cost-effective and space saving battery system with high service life may be obtained.

The invention also pertains to an electric vehicle including a battery module according to the disclosure and/or a battery system according to the disclosure.

Further, the invention refers to a method for assembling a battery module, namely the above-mentioned battery module.

According to one step of the method, a battery cell stack with a plurality of battery cells arranged along a stacking direction is provided.

According to another step of the method, a housing configured to accommodate the battery cell stack is provided. The housing includes a bottom portion, a top portion, two side portions arranged opposite to each other with respect to the stacking direction and interconnecting the bottom portion and the top portion along a height direction and a side opening through which the battery cell stack is insertable into or removable from the housing along an insertion direction orthogonal to the stacking direction and orthogonal to the height direction. The top portion includes an opened section to overlay the electrode terminals and the venting valves of the plurality of battery cells of the battery cell stack when the battery cell stack is accommodated in the housing.

According to another step of the method, the battery cell stack is inserted into the housing through the side opening along the insertion direction.

According to an optional step of the method, the electrode terminals of each row of the electrode terminals of the plurality of battery cells of the accommodated battery cell stack may be interconnected. Alternatively, the electrode terminals of the battery cells of the battery cell stack may be interconnected prior to insertion into the housing. In other words, the electrode terminals of the battery cells of the provided battery cell stack may already be interconnected.

According to another optional step of the method, the inserting of the battery cell stack may include the steps of compressing the compressible elastic members of the battery cell stack, for example with a pliers device, and positioning the compressed battery cell stack into the housing.

The invention also pertains to a housing configured to accommodate a battery cell stack. The housing includes a bottom portion, a top portion, two side portions arranged opposite to each other with respect to a stacking direction of the battery cells of the battery cell stack and interconnecting the bottom portion and the top portion along a height direction and a side opening through which the battery cell stack is insertable into or removable from the housing along an insertion direction orthogonal to the stacking direction and orthogonal to the height direction. The top portion includes an opened section to overlay electrode terminals and venting valves of the battery cells of the battery cell stack when the battery cell stack is accommodated in the housing.

### Specific Embodiments

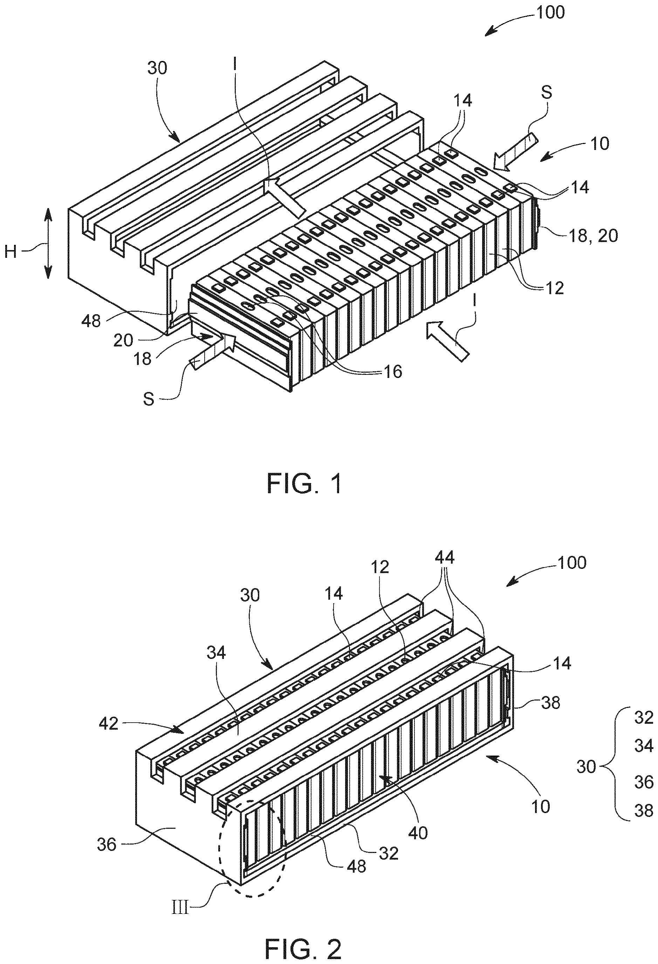

FIG. 1 is a schematic perspective view of a battery module 100 according to an embodiment in a first configuration. FIG. 2 illustrates a schematic perspective view of the battery module of FIG. 1 in a second configuration.

The battery module 100 includes a battery cell stack 10 and a housing 30 configured to accommodate the battery cell stack 10. In the first configuration, the battery cell stack 10 and the housing 30 are separated from each other. In the second configuration, the battery cell stack 10 is entirely accommodated in the housing 30.

The battery cell stack 10 includes a plurality of battery cells 12 arranged along a stacking direction S. As shown in Fig.1, the battery cells 12 may be prismatic cells, i.e. cells whose chemistry is enclosed in a rigid casing. Due to the rectangular shape, the battery cells 12 can be efficiently stacked along the stacking direction S. For example, the shortest side of the prismatic cell, if provided, is arranged in parallel with the stacking direction S. On the top surface, each battery cell 12 includes a pair of electrode terminals 14 arranged on opposite ends of the battery cell 12 with respect to a direction orthogonal to the stacking direction S (cf. insertion direction I, which is explained later in view of the housing 30). Each battery cell 12 further includes a venting valve 16 between the electrode terminals 14. Due to the stacked structure, the electrode terminals 14 and the venting valves 16 are arranged in respective rows extending along the stacking direction S.

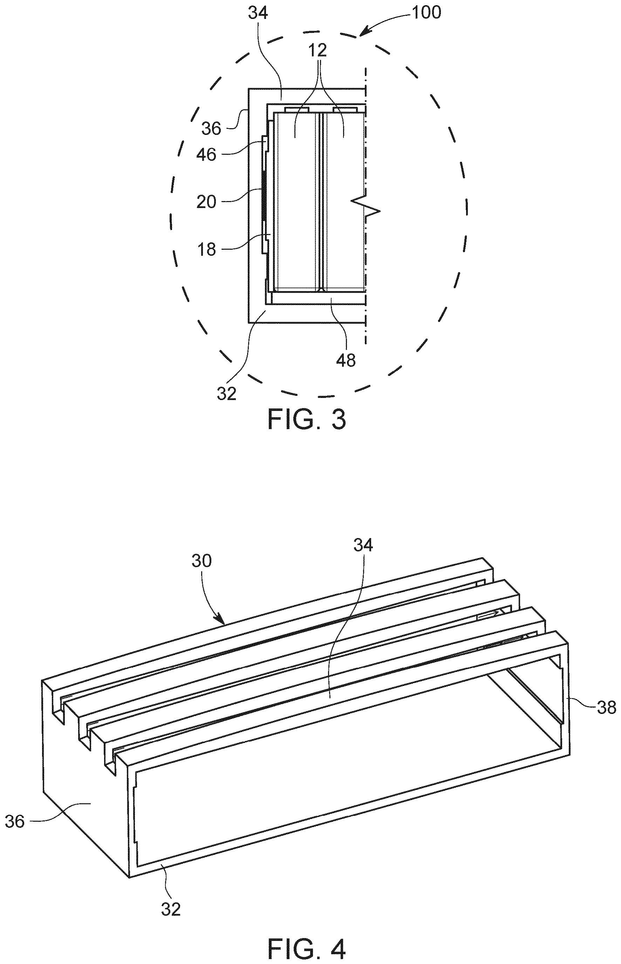

The battery cell stack 10 further includes a force distribution plate 18 and a compressible elastic element 20 arranged at each of the end portions of the battery cell stack 10 in the stacking direction S. The force distribution plates 18 are formed and arranged such that the surface of the respective outer battery cell 12 of the battery cell stack 10 with respect to the stacking direction S is substantially entirely covered by the force distribution plate 18. Accordingly, the battery cell stack 10 may be handled by contacting the distribution plates 18 without being damaged. The compressible elastic elements 20 may be degressive springs which are disposed on the outer surface of the respective distribution plate 18 with respect to the stacking direction S. The compressible elastic elements 20 may be compressed during grabbing the battery cell stack 10 at the force distribution plates 18, e.g. with a pliers device, such that the extension of the battery cell stack 10 along the stacking direction S is reversibly reducible until the battery cell stack 10 will be accommodated in the housing 30 as explained later in view of FIG. 3. However, the invention is not limited thereto and the force distribution plates 18 and the compressible elastic elements 20 may also be omitted.

Referring now to the housing 30 which will be described in further detail in view of FIG. 2. The housing 30 includes a bottom portion 32, a top portion 34, a first side portion 36 and a second side portion 38. The bottom and top portions 32, 34 are arranged opposite to each other with respect to a height direction H (cf. FIG. 1). The height direction H refers to a direction of the height of the battery cells 12 of the battery cell stack 10. Thus, the height direction H is orthogonal to the staking direction S. The first and second side portions 36, 38 are arranged opposite to each other with respect to the stacking direction S and interconnect the bottom portion 32 and the top portion 34 along the height direction H.

The housing 30 further has a side opening 40 through which the battery cell stack 10 is insertable into or removable from the housing 30 along an insertion direction I. The insertion direction I, as shown in FIG. 1, is orthogonal to the stacking direction S and orthogonal to the height direction H. In other words, the housing 30 provides a structure circumferentially enclosing the inserted or accommodated battery cell stack 10, when viewed from the insertion direction I (see FIG. 2). That is, the housing 30 is a closed structure, e.g. a closed frame, with an insertion opening (the side opening 40), when viewed from the insertion direction I. Due to this structure, bending of the side portions 36, 38 along the stacking direction S, e.g. during assembly or operation of the battery module 100, may be prevented or at least reduced.

At the side arranged opposite to the side opening 40 along the insertion direction I, the housing 30 may be closed, e.g. by a wall extending from the bottom portion 32 to the top portion 34 along the height direction H. Due to the closure of the side opposite to the side opening 40, the wall may act as a limit stop when the battery cell stack 10 is inserted into the housing 30. Accordingly, the assembly thereof is facilitated and the robustness of the battery module 100 may be enhanced.

Alternatively and as shown in the embodiment shown in FIGS. 1 and 2, the housing 30 includes another side opening at the side arranged opposite to the side opening 40 along the insertion direction I and through which the battery cell stack 10 is also insertable into or removable from the housing 30 along an insertion direction I. The side openings 40 may be formed identically. Accordingly, the battery cell stack 10 is insertable into the housing 30 from both sides, if required, thereby facilitating the assembly of the battery module 100. In addition, less space along the insertion direction I is required. In other words, the length of the battery cell stack 10 may correspond to the length of the housing 30 with respect to the insertion direction I such that the battery cell stack 10 may be arranged flush (or less than flush, i.e. the housing 30 protrudes) with the housing 30. Advantageously, a compact battery module 100 may be obtained. The length of the housing 30 along the insertion direction I may be of a value such that the battery cell stack 10 may be accommodated entirely in the housing 30, at least with respect to the insertion direction I, as shown in FIG. 2.

As further shown in the FIGS. 1 and 2, the top portion 34 of the housing 30 has an opened section 42 to overlay the electrode terminals 14 and the venting valves 16 of the plurality of battery cells 12 of the battery cell stack 10 when the battery cell stack 10 is accommodated in the housing 30 (cf. FIG. 2). In other words, the opened section 42 is configured such that the electrode terminals 14 and the venting valves 16 of the plurality of battery cells 12 of the accommodated battery cell stack 10 are exposed when viewed from above, i.e. on the top portion 34 of the housing 30. Due to the exposure of the electrode terminals 14 and the venting valves 16, which may be regarded as the functional areas of the battery cells 12, the electrode terminals 14 may be connected easily subsequently and the venting valves 16 are not blocked by the housing 30 in case of a venting event in which the venting of the battery cell 12 via the venting valve 16 is required. The opened section 42 is encompassed by the top portion 34 along the insertion direction I, e.g. by bars extending between the side portions 36, 38 along the stacking direction S. In other words, despite the opened section 42 to provide access to the functional areas of the battery cells 12, the top portion 34 increases rigidity and stiffness of the housing 30 against potential bending of the side portions 36, 38. Accordingly, bending of the side portions 36, 38 of the housing 30 can be prevented or at least reduced and, thus, the service life of the battery module 100 can be increased. The opened section 42 can make it easy to insert or remove the cell stack 10 into or from the housing 30.

As shown in FIGS. 1 and 2, the opened section 42 may be three slit-like openings 44 extending entirely through the top portion 34 along the stacking direction S. Two of the three slit-like openings are formed so as to overlay the respective rows of electrode terminals 14, i.e. one slit-like opening 44 for each row of electrode terminals 14, and third of the three slit-like openings 44 is formed so as to overlay the venting valves 16 of the plurality of battery cells 12 of the battery cell stack 10 when the battery cell stack 10 is accommodated in the housing 30. In other words, the top portion 34 of the housing 30 includes two outer and two inner bars extending from one of the side portions 36, 38 to the other along the stacking direction S, such that each slit-like opening 44 is formed between two adjacent bars. The more connections of the top portion 34 along the stacking direction S are provided, e.g. the use of additional bars to provide three slit-like openings 44, the more rigidity and stiffness of the housing 30 against potential bending of the side portions 36, 38 is obtained, while still ensuring that the electrode terminals 14 and the venting valves 16 are exposed when viewed from above, i.e. on the top portion 34. The slit-like openings 44 are arranged in parallel to each other.

As further depicted in FIGS. 1 and 2, the housing 30 includes a cooling plate 48 arranged on the bottom portion 32. The cooling plate 48 enhances heat dissipation. The cooling plate 48 is arranged on an inner side of the bottom portion 32, i.e. the surface of the bottom portion 32 facing the accommodated battery cell stack 10. In other words, the cooling plate 48 is arranged between the bottom portion 32 of the housing 30 and the accommodated battery cell stack 10. Advantageously, the transmission of heat in the battery module 100, e.g. generated by the operation of the battery cells 12, towards the outside is further enhanced due to the positioning, thereby reducing the amount of swelling of the battery cells 12, and, thus, the amount of bending of the side portions 36, 38 of the housing 30. However, the invention is not limited thereto and the cooling plate 48 may be omitted.

Now referring to FIG. 3 which illustrates a schematic enlarged view of III shown in FIG. 2. As shown in the enlarged cross section of one of the end sections of the battery module 100 along the stacking direction S, each of the side portions 36, 38 of the housing 30 includes a recess 46 for receiving the respective compressed elastic element 20 when the battery cell stack 10 is accommodated in the housing 30. The compressible elastic elements 20 are compressed during grabbing the battery cell stack 10 at the force distribution plates 18, e.g. with a pliers device, such that the extension of the battery cell stack 10 along the stacking direction S is reversibly reducible until the battery cell stack 10 is accommodated in the housing 30. The compressible elastic elements 20 provide a restoration force against the side portions 36, 38 of the housing 30 to ensure a firm seating of the accommodated battery cell stack 10. Accordingly, the assembly of the battery module 100 is facilitated and the service life thereof is improved.

The recesses 46 are configured to provide further space along the stacking direction S for inserting the battery cell stack 10 into the housing 30, thereby further facilitating the assembly of the battery module 100. A depth of each of the recesses 48 is more than 5 percent and less than 20 percent of the thickness of the respective side portion 36, 38 along the stacking direction S. That is, the housing 30 and the recesses 46 are designed such that the compressible elastic elements 20 are compressed when the battery cell stack 10 is accommodated in the housing 30 by at least 10 percent and up to 50 percent with respect to the length of the compressible elastic element 20 in the rest position. However, the invention is not limited thereto and the recesses 46 may also be omitted.

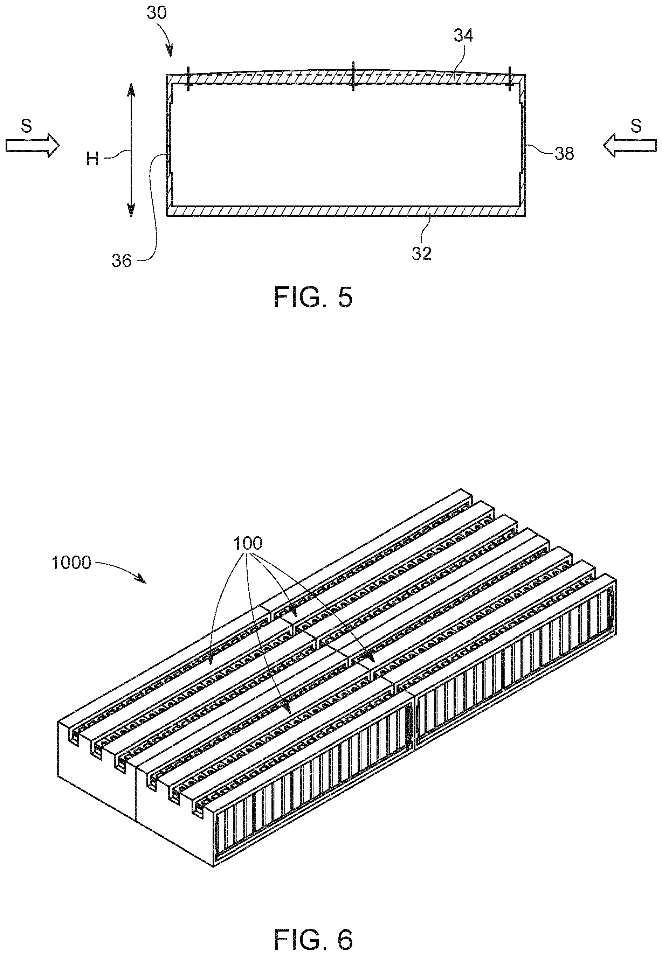

FIG. 4 illustrates a schematic perspective view of a housing 30 according to an embodiment and FIG. 5 depicts a schematic cross section of the housing 30 shown in FIG. 4. As shown in the FIGS. 4 and 5, the top portion 34 may have a convex shape. In other words, the middle section of the top portion 34 along the stacking direction S is formed thicker than the end portions of the top portion 34 along the stacking direction S (cf. FIG. 5). At least one of (or each of) the bars extending between the side portions 36, 38 includes the convex shape (see FIG. 4). Due to the convex shape, the risk of bending of the side portions 36, 38 may be further reduced. The top portion 34 includes a single convex shape arranged at one surface, e.g. the outer surface as shown in FIGS. 4 and 5, or a double convex shape arranged on both, the inner and the outer surfaces (not shown). The convex shape is formed such that the middle section of the top portion 34 along the stacking direction S is at least 5 percent and less 25 percent thicker than the end portions of the top portion 34 along the stacking direction S. However, the invention is not limited thereto and the convex shape may be omitted. For example, the bars may also be formed planar.

The housing 30 may be made of plastics or a hybrid combination including plastics. Due to the closed structure of the housing 30, the rigidity and stiffness thereof are increased to such an extent that materials with less mechanical resilience compared to the commonly used metals in the prior art, such as aluminum, may be used. In contrast to metals, plastics are insulating, thereby reducing the risk of current leakage or short circuiting. The mechanical properties of plastics and aluminum are shown in the following Table 1.

**Table 1: Mechanical properties of plastics and aluminum**

| Mechanical properties of plastics | | Mechanical properties of aluminum | |
|---|---|---|---|
| Elasticity modulus | 1.43e+10 [pa] | Elasticity modulus | 6.9e+10 [pa] |
| Poisson's ratio | 3.5e-01 | Poisson's ratio | 3.3e-01 |

| | [dimensionless] | | [dimensionless] |
|---|---|---|---|
| Density | 1.626e+03 [kg/m^3] | Density | 2.7e+03 [kg/m^3] |
| Ultimate tensile stress | 1.15e+08 [pa] | Ultimate tensile stress | 3.1e+08 [pa] |
| Tensile yield stress | 1.3e+08 [pa] | Tensile yield stress | 2.76e+08 [pa] |
| Compressive yield stress | 1.15e+08 [pa] | Compressive yield stress | 2.76e+08 [pa] |

FIG. 6 illustrates a schematic perspective view of the battery system 1000 including four battery modules 100 shown in FIG. 1. The plurality of battery modules 100 can be arranged adjacent to each other in a modular manner, e.g. a grid-like arrangement. In other words, the battery modules 100 may be arranged adjacent to each other in the stacking direction S and the insertion direction I. As shown in FIG. 6, the battery modules 100 may be arranged in a 2x2 grid-like arrangement. Accordingly, a cost-effective and space saving battery system 1000 with high service life may be obtained in a modular manner. For example, the venting channels provided by the slit-like opening 44 covering the venting valves 16 of each battery module 100 may be fluidly connected with the respective venting channel of an adjacent battery module in the stacking direction S such that the venting channels may be easily achieved by the battery system 1000 and without requiring any further space along the height direction H. In addition, the rows of electrode terminals 14 of adjacent battery modules in the stacking direction S may be interconnected with ease as well, if necessary. However, the battery system 1000 is not limited to the depicted number of battery modules 100 and may include any number of battery modules 100 in any arrangement as required by the particular case.

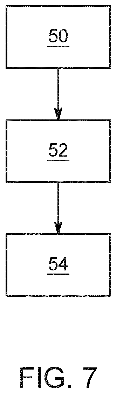

FIG. 7 illustrates a schematic flow chart of a method for assembling the battery module 100 shown in FIG. 1 according to an embodiment.

According to a first step 50, the above-mentioned battery cell stack 10 with a plurality of battery cells 12 arranged along a stacking direction S is provided.

According to a second step 52 of the method, a housing 30 configured to accommodate the battery cell stack 10 is provided. The housing 30 refers to the above-mentioned housing 30. The housing 30 includes a bottom portion 32, a top portion 34, two side portions 36, 38 arranged opposite to each other with respect to the stacking direction S and interconnecting the bottom portion 32 and the top portion 34 along a height direction H and a side opening 40 through which the battery cell stack 10 is insertable into or removable from the housing 30 along an insertion direction I. The insertion direction I is orthogonal to the stacking direction S and orthogonal to the height direction H. The top portion 34 includes an opened section 42 to overlay the electrode terminals 14 and the venting valves 16 of the plurality of battery cells 12 of the battery cell stack 10 when the battery cell stack 10 is accommodated in the housing 30, as shown in FIG. 2, for example.

According to a third step 54 of the method, the battery cell stack 10 is inserted into the housing 30 through the side opening 40 along the insertion direction I, as shown in FIG. 1, for example.

### Reference signs

- 10: battery cell stack
- 12: battery cells
- 14: electrode terminals
- 16: venting valve
- 18: force distribution plate
- 20: compressible elastic element
- 30: housing
- 32: bottom portion
- 34: top portion
- 36: first side portion
- 38: second side portion
- 40: side opening
- 42: opened section
- 44: slit-like openings
- 46: recess
- 48: cooling plate

- 50: first method step - providing a battery cell stack
- 52: second method step - providing a housing
- 54: third method step - inserting the battery cell stack

- 100: battery module
- 1000: battery system

- S: stacking direction
- I: insertion direction
- H: height direction

## Claims

1. A battery module (100), comprising:
a battery cell stack (10) with a plurality of battery cells (12) arranged along a stacking direction (S); and
a housing (30) configured to accommodate the battery cell stack (10);
wherein the housing (30) comprises a bottom portion (32), a top portion (34), two side portions (36, 38) arranged opposite to each other with respect to the stacking direction (S) and interconnecting the bottom portion (32) and the top portion (34) along a height direction (H); and has a side opening (40) through which the battery cell stack (10) is insertable into or removable from the housing (30) along an insertion direction (I) orthogonal to the stacking direction (S) and orthogonal to the height direction (H);
wherein the top portion (34) has an opened section (42) to overlay the electrode terminals (14) and the venting valves (16) of the plurality of battery cells (12) of the battery cell stack (10).

2. The battery module (100) according to claim 1, wherein the opened section (42) is a slit-like opening (44) extending through the top portion (34) along the stacking direction (S).

3. The battery module (100) according to claim 2, wherein the number of the slit-like opening (44) is three, wherein two of the slit-like openings (44) overlay the electrode terminals (14) and the other of the slit-like openings (44) overlays the venting valves (16) of the plurality of battery cells (12) of the battery cell stack (10).

4. The battery module (100) according to any one of the preceding claims, wherein the opened section (42) extends entirely through the top portion (34) along the stacking direction (S).

5. The battery module (100) according to any one of the preceding claims, wherein the battery cell stack (10) comprises a force distribution plate (18) and a compressible elastic element (20) arranged at each of the end portions of the battery cell stack (10) in the stacking direction (S).

6. The battery module (100) according to claim 5, wherein the compressible elastic elements (20) are degressive springs.

7. The battery module (100) according to claims 5 or 6, wherein each of the side portions (36, 38) of the housing (30) comprises a recess (46) configured to receive the compressed elastic element.

8. The battery module (100) according to any one of the preceding claims, wherein the housing (30) further comprises a cooling plate (48) arranged on the bottom portion (32).

9. The battery module (100) according to any one of the preceding claims, wherein the bottom portion (32), the top portion (34) and the side portions (36, 38) of the housing (30) are integrally formed or connected to each other in a fabric-conclusive manner.

10. The battery module (100) according to any one of the preceding claims, wherein the housing (30) is made of plastics or a hybrid combination including plastics.

11. The battery module (100) according to any one of the preceding claims, wherein the top portion (34) has a convex shape.

12. A battery system (1000) comprising a plurality of battery modules (100) according to any one of the preceding claims arranged adjacent to each other.

13. An electric vehicle including the battery module (100) according to any one of the claims 1 to 11 and/or the battery system (1000) according to claim 12.

14. A method for assembling a battery module (100), wherein the method comprises the steps of:
a) providing (50) a battery cell stack (10) with a plurality of battery cells (12) arranged along a stacking direction (S);
b) providing (52) a housing (30) configured to accommodate the battery cell stack (10); wherein the housing (30) comprises a bottom portion (32), a top portion (34), two side portions (36, 38) arranged opposite to each other with respect to the stacking direction (S) and interconnecting the bottom portion (32) and the top portion (34) along a height direction (H) and a side opening (40) through which the battery cell stack (10) is insertable into or removable from the housing (30) along an insertion direction (I) orthogonal to the stacking direction (S) and orthogonal to the height direction (H), wherein the top portion (34) comprises an opened section (42) to overlay the electrode terminals (14) and the venting valves (16) of the plurality of battery cells (12) of the battery cell stack (10); and
c) inserting (54) the battery cell stack (10) into the housing (30) through the side opening (40) along the insertion direction (I).

15. A housing (30) configured to accommodate a battery cell stack (10), comprising a bottom portion (32), a top portion (34), two side portions (36, 38) arranged opposite to each other with respect to a stacking direction (S) of the battery cells (12) of the battery cell stack (10) and interconnecting the bottom portion (32) and the top portion (34) along a height direction (H) and having a side opening (40) through which the battery cell stack (10) is insertable into or removable from the housing (30) along an insertion direction (I) orthogonal to the stacking direction (S) and orthogonal to the height direction (H);
wherein the top portion (34) comprises an opened section (42) to overlay electrode terminals (14) and venting valves (16) of the battery cells (12) of the battery cell stack (10).

## Amended claims

### Amended claims in accordance with Rule 137(2) EPC.

1. A battery module (100), comprising:
a battery cell stack (10) with a plurality of battery cells (12) arranged along a stacking direction (S), the plurality of battery cells (12) comprising electrode terminals (14) and venting valves (16); and
a housing (30) configured to accommodate the battery cell stack (10);
wherein the housing (30) comprises a bottom portion (32), a top portion (34), two side portions (36, 38) arranged opposite to each other with respect to the stacking direction (S) and interconnecting the bottom portion (32) and the top portion (34) along a height direction (H); and has a side opening (40) through which the battery cell stack (10) is insertable into or removable from the housing (30) along an insertion direction (I) orthogonal to the stacking direction (S) and orthogonal to the height direction (H),
wherein the housing (30) is a closed structure circumferentially enclosing the inserted battery cell stack (10), when viewed from the insertion direction (I);
wherein the top portion (34) has an opened section (42) to overlay the electrode terminals (14) and the venting valves (16) of the plurality of battery cells (12) of the battery cell stack (10).

2. The battery module (100) according to claim 1, wherein the opened section (42) is a slit-like opening (44) extending through the top portion (34) along the stacking direction (S).

3. The battery module (100) according to claim 2, wherein the number of the slit-like opening (44) is three, wherein two of the slit-like openings (44) overlay the electrode terminals (14) and the other of the slit-like openings (44) overlays the venting valves (16) of the plurality of battery cells (12) of the battery cell stack (10).

4. The battery module (100) according to any one of the preceding claims, wherein the opened section (42) extends entirely through the top portion (34) along the stacking direction (S).

5. The battery module (100) according to any one of the preceding claims, wherein the battery cell stack (10) comprises a force distribution plate (18) and a compressible elastic element (20) arranged at each of the end portions of the battery cell stack (10) in the stacking direction (S).

6. The battery module (100) according to claim 5, wherein the compressible elastic elements (20) are degressive springs.

7. The battery module (100) according to claims 5 or 6, wherein each of the side portions (36, 38) of the housing (30) comprises a recess (46) configured to receive the compressed elastic element.

8. The battery module (100) according to any one of the preceding claims, wherein the housing (30) further comprises a cooling plate (48) arranged on the bottom portion (32).

9. The battery module (100) according to any one of the preceding claims, wherein the bottom portion (32), the top portion (34) and the side portions (36, 38) of the housing (30) are integrally formed or separative parts which are connected to each other in a subsequent step.

10. The battery module (100) according to any one of the preceding claims, wherein the housing (30) is made of plastics or a hybrid combination including plastics.

11. The battery module (100) according to any one of the preceding claims, wherein the top portion (34) has a convex shape.

12. A battery system (1000) comprising a plurality of battery modules (100) according to any one of the preceding claims arranged adjacent to each other.

13. An electric vehicle including the battery module (100) according to any one of the claims 1 to 11 and/or the battery system (1000) according to claim 12.

14. A method for assembling a battery module (100), wherein the method comprises the steps of:
a) providing (50) a battery cell stack (10) with a plurality of battery cells (12) arranged along a stacking direction (S), the plurality of battery cells (12) comprising electrode terminals (14) and venting valves (16);
b) providing (52) a housing (30) configured to accommodate the battery cell stack (10); wherein the housing (30) comprises a bottom portion (32), a top portion (34), two side portions (36, 38) arranged opposite to each other with respect to the stacking direction (S) and interconnecting the bottom portion (32) and the top portion (34) along a height direction (H) and a side opening (40) through which the battery cell stack (10) is insertable into or removable from the housing (30) along an insertion direction (I) orthogonal to the stacking direction (S) and orthogonal to the height direction (H), wherein the top portion (34) comprises an opened section (42) to overlay the electrode terminals (14) and the venting valves (16) of the plurality of battery cells (12) of the battery cell stack (10); and
c) inserting (54) the battery cell stack (10) into the housing (30) through the side opening (40) along the insertion direction (I), wherein the housing (30) is a closed structure circumferentially enclosing the inserted battery cell stack (10), when viewed from the insertion direction (I).
